# EUROPÄISCHE PATENTANMELDUNG

(11) **EP 2 573 512 A2**
(43) Veröffentlichungstag der Anmeldung: **27.03.2013**
(21) Anmeldenummer: 12176583.8
(22) Anmeldetag: 16.07.2012
(51) Int. Cl.: G01C 11/06, G01C 15/00

(54) **Verfahren und Anordnung zur Bestimmung der Lage eines Messpunktes im geometrischen Raum**

(30) Priorität: 25.09.2011 DE 102011114115
(71) Anmelder: Pagan, Robin, 70563 Stuttgart (DE); Kurtovic, Zdenko, 8153 Rümlang (CH)
(72) Erfinder: Pagan, Robin, 70563 Stuttgart (DE); Kurtovic, Zdenko, 8153 Rümlang (CH)
(74) Vertreter: Borchert, Uwe Rudolf

(57) **Zusammenfassung**

Die computerprogrammgesteuerte Bestimmung der Lage eines zu vermessenden Messpunktes M im dreidimensionalen Raum erfordert zwei Referenzpunkte PI und PII mit bekannten Raumkoordinaten, eine Digital-Video-Kamera mit einem Bilderfassungssensor und einen Computer mit Bildschirmgerät. Die Kamera wird im Referenzpunkte PI positioniert. Sie kann in dieser Position in zwei unterschiedliche Ausrichtungspositionen PI* und PI** geschwenkt werden. In der ersten Schwenkposition PI* erscheinen u.a. auf dem Bildschirm die Abbildung PII' des entfernt liegenden zweiten Referenzpunkts PII und eine Vielzahl von Markierungspunkten (PI', P2', P3', P4' / PS'""), welche sich aus Sprüngen im Helligkeitsverlauf des aufgenommenen Bildes ergeben. In der zweiten Schwenkposition PI** erscheinen auf dem Bildschirm an verschobener Position nur noch bestimmte nach einem vorgegebenem Kriterium ausgewählte Markierungspunkte (PI' " P2 // P3", ...) und der zu vermessende Messpunkt M.

Aus den Bildschirmdarstellungen wird die Lage eines gedachten Strahls im geometrischen Raum errechnet, auf dem der Messpunkt M und der Referenzpunkt PI liegen. Seine (M) absoluten Raumkoordinaten können aus dem Strahlverlauf und dem Entfernungswert (von PI nach M) berechnet werden.

## Beschreibung

Die Erfindung bezieht sich auf das Gebiet der Vermessungstechnik, insbesondere auf ein Verfahren und eine Anordnung zur Bestimmung der Lage eines Messpunktes in einem geometrischen Raum.

Das erfindungsgemäße Verfahren bzw. die erfindungsgemäße Anordnung ist unter Ausnutzung von zur Zeit verfügbarer Hard- und Software vorzugsweise im Nahbereich von 100 m mit einer Messgenauigkeit von beispielsweise 1 cm bzw. einer Winkelgenauigkeit von 0,005 Grad anwendbar. Zur Durchführung des erfindungsgemäßen Verfahrens sind zwei Referenzpunkte PI und PII mit bekannten Raumkoordinaten erforderlich. PII sollte weit entfernt von PI, dem Aufstellungsort für die Digital-Video-Kamera des Vermessungsgerätes, liegen. Der von PI aus anzupeilende im geometrischen Raum positionierte Messpunkt M sollte innerhalb einer 100m-Entfernung von PI liegen. Es sind auch größere Entfernungen (mehr als 100 m) denkbar mit geringeren Messgenauigkeiten (> 1 cm).

Das erfindungsgemäße Verfahren zeichnet sich dadurch aus,
a) dass nur eine Aufstellung des Vermessungsgerätes (in Messposition PI) erforderlich ist. Durch dieses wird die Lage eines gedachten Strahls im geometrischen Raum ermittelt, der den zu vermessenden Messpunkt M im geometrischen Raum mit dem Punkt PI verbindet. In diesem Fall ist die Lage des Messpunktes M im geometrischen Raum nur durch die Angabe gekennzeichnet, dass der Messpunkt irgendwo auf dem "Messpunkt"-Strahl liegt, dessen Anordnung (Lage) im geometrischen Raum errechnet wird,
b) und dass die exakte Position des Messpunktes M im geometrischen Raum bestimmt werden kann, wenn das Vermessungsgerät um einen Entfernungsmesser erweitert wird. Durch diesen Entfernungsmesser wird die Entfernung PI-M zwischen PI und dem Messpunkt M ermittelt. Aus der berechneten Lage des "Messpunkt"-Strahls im geometrischen Raum und aus der ermittelten Entfernung PI-M wird die exakte Position des Messpunktes M im geometrischen Raum ermittelt.

Bei dem erfindungsgemäßen Verfahren ist jeder erfasste Punkt automatisch (computerprogrammgesteuert) protokolierbar, es ist flexibel und kostengünstig durchführbar.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Ein Ausführungsbeispiel für den Ablauf des erfindungsgemäßen Verfahrens zur Bestimmung der Lage eines Messpunktes bzw. für die Anordnung zur Bestimmung der Lage eines Messpunktes ist in den Zeichnungen dargestellt und wird im Folgenden näher beschrieben. Es zeigen:
- Fig.1: eine isometrische Prinzipdarstellung für zwei im dreidimensionalen Raum liegenden Referenzpunkte PI und PII, deren Lage durch ihre kartesischen Koordinaten bestimmt ist;
- Fig.2: eine schematische Darstellung einer Vermessungsanordnung, welche aus einer Digital-Video-Kamera mit einer Bilderfassungsebene und einem Objektiv, einem Computer und einem Bildschirm besteht, wobei die Kamera an einem Referenzpunkt PI mit bekannten Raumkoordinaten aufstellbar ist mit einer bestimmten Ausrichtung PI* ihrer optischen Achse.
Auf dem Bild der Video-Kamera ist ein im Raum angeordneter Referenzpunkt PII mit bekannten Raumkoordinaten abgebildet;
- Fig. 3A: eine schematische Darstellung eines von der Kamera am Aufstellungsort PI in Ausrichtung PI* aufgenommenen Bildes BO auf dem Bildschirm, auf welchem der im dreidimensionalen Raum liegende Referenzpunkt PII als PII' abgebildet ist;
- Fig.3B: eine schematische Darstellung eines von der Kamera am Aufstellungsort PI in Ausrichtung PI* aufgenommenen Bildes B1 auf dem Bildschirm, auf welchem durch bestimmte Kriterien definierte Markierungspunkte abgebildet sind;

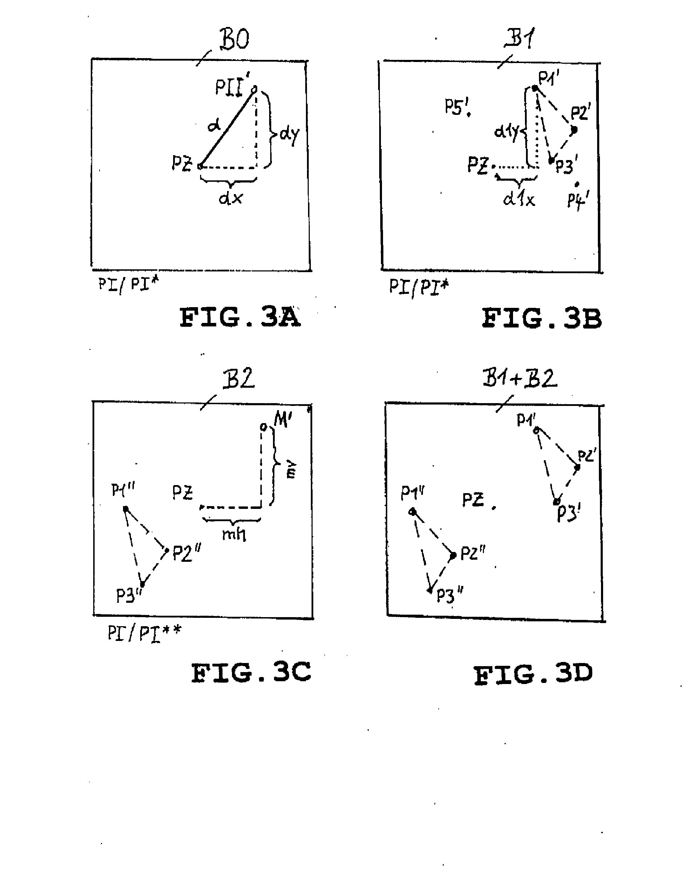

- Fig. 3C: eine schematische Darstellung eines von der Kamera am Aufstellungsort PI in Ausrichtung PI** aufgenommenen Bildes B2. Im Bild B2 in Fig. 3C erscheinen nur bestimmte Markierungspunkte aus dem Bild B1 in Fig. 3B an verschobener Stelle auf dem Bildschirm. Diese Markierungspunkte werden FIX-Markierungspunkte genannt, weil ihre gegenseitige "raum"-winkelbezogene Abweichung in Bild 2 die gleiche ist wie in Bild 1. In diesem Zusammenhang sei bemerkt, dass die Punkte P1, P1' und P1" einander entsprechen. Analoges gilt für P2, P2', P2" usw. Des Weiteren ist in der Bildschirmdarstellung B2 (Fig. 3C) ein im Raum liegender Messpunkt M als M' abgebildet, dessen Lage im Raum zu bestimmen ist.
- Fig.3D: eine schematische Darstellung der Überlagerung des Bildes B1 gemäß Fig. 3B mit dem Bild B2 gemäß Fig. 3C (ohne Berücksichtigung der Abbildung M' des Messpunktes M).
- Fig.4A: eine schematische Darstellung der Bildschirmebene für Positionsangaben in kartesischen x-y Koordinaten bzw. in Winkelkoordinaten.
- Fig.4B: eine schematische Hilfsdarstellung zur Eichung der Bildschirmdarstellung gemäß Fig. 4A in Winkelkoordinaten.

Das Ausführungsbeispiel der Erfindung bezieht sich auf einen geometrischen Raum, der durch kartesische x-y-z Koordinaten gekennzeichnet ist. Grundsätzlich bezieht sich die Erfindung auch auf geometrische Räume, die durch andere als die kartesischen Koordinaten strukturiert sind.

Es wird darauf hingewiesen, dass es bekannt ist, Koordinatensysteme zu transformieren.

Außerdem sei zum leichteren Verständnis der Beschreibung der Erfindung bemerkt, dass es mathematisch bekannt ist,
a) die Lage eines gedachten Strahles im dreidimensionalen Raum aus den x-y-z Koordinaten zweier Punkte zu ermitteln, welche auf diesem Strahl liegen, und
b) aus der bekannten Lage eines Strahls im dreidimensionalen Raum, auf dem ein erster Punkt G (nicht dargestellt) mit bekannten Raum-Koordinaten liegt, und aus den bekannten x-y- BildschirmKoordinaten der optisch bewirkten Abbildung eines zweiten Raumpunktes H (nicht dargestellt) unbekannter Raumkoordinaten in einer Bildschirmebene, die Lage des Strahls im dreidimensionalen Raum zu errechnen, welcher die Punkte G und H passiert.

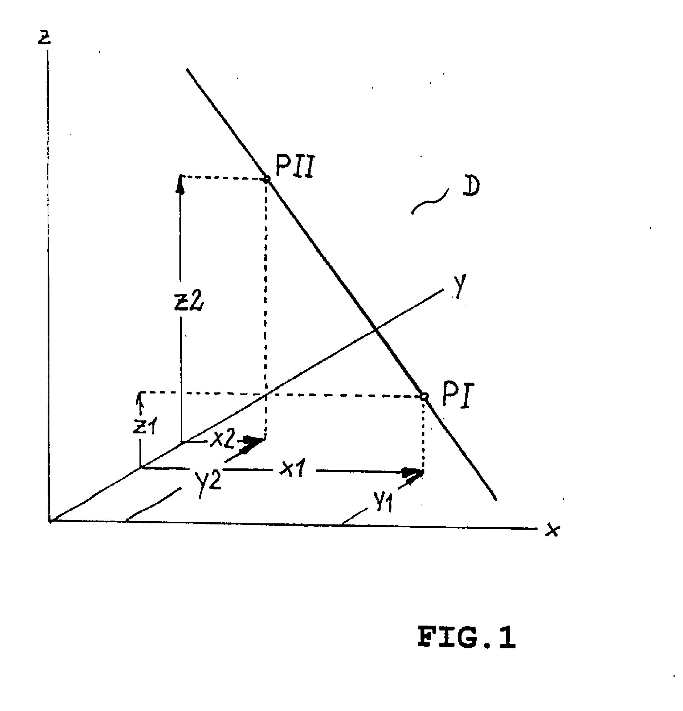

Fig. 1 zeigt eine isometrische Prinzipdarstellung für zwei im dreidimensionalen Raum D liegende Referenzpunkte PI und PII, deren Lage durch ihre kartesischen Koordinaten x1, y1, z1 bzw. x2, y2, z2 bestimmt ist.

Weitere im Zusammenhang mit der Erklärung der Erfindung erwähnten Raumpunkte sind in der Darstellung gemäß Fig.1 aus Übersichtsgründen nicht wiedergegeben.

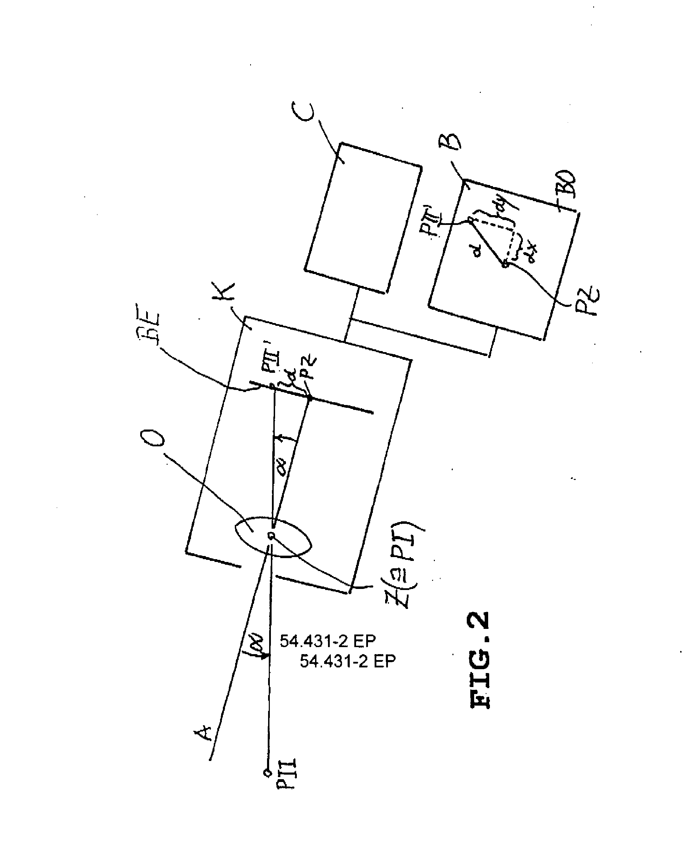

Fig.2 zeigt eine schematische Darstellung einer Vermessungsanordnung, welche eine Digital-Video-Kamera K mit einer Bilderfassungsebene BE und einem Objektiv O, einen Computer C und einen Bildschirm B umfasst. Kamera K, Computer C und Bildschirm B sind miteinander verbunden. Die Kamera K ist so aufgestellt, dass das optische Zentrum Z ihrer Optik = mit einem Referenzpunkt PI mit vorgebbaren x y z-Raumkoordinaten zusammenfällt. Sie ist in einer bestimmten Ausrichtung PI* derart ausgerichtet, dass ein im Raum angeordneter Referenzpunkt PII mit bekannten Raumkoordinaten als Bildpunkt PII' im Bild BO auf dem Bildschirm B abgebildet wird. Die Kamera K umfasst einen Bildsensorchip mit einer Bilderfassungsebene. Die Bilderfassungsebene BE wie auch der Bildschirm B der Kamera K besteht aus adressierbaren rasterartig angeordneten Pixels (Bildpunktpositionen). Die optische Achse der Kamera K verläuft durch das Zentrum Z des Objektivs O und steht im Punkt PZ senkrecht auf der Bilderfassungsebene BE. Der Bildschirm B des Computers C dient der Darstellung des von der Digital-Video-Kamera K aufgenommenen, in der Bilderfassungsebene erscheinenden Bildes und zur Markierung von Büdpunkten.

Die Bildschirmdarstellung BO gemäß Fig. 2 bzw. BO in Fig. 3A bezieht sich auf einen Aufstellungsort der Kamera K, bei dem der Referenzpunkt PI (mit vorgebbaren x y z Raumkoordinaten) mit dem Zentrum Z des Objektivs O übereinstimmt. In dieser Aufstellungsposition nimmt die Kamera eine derartige Schwenkposition PI* ein, dass der im dreidimensionalen Raum liegende Referenzpunkt PII (mit bekannten x y z Raumkoordinaten) auf dem Bildschirm im Bild BO als PII'- Punkt wiedergegeben wird.

Für die Ausrichtung der Kamera in eine bestimmte Ausrichtposition (hier PI*) wird die Kamera K quasi um den Punkt Z im Zentrum ihres Objektivs geschwenkt.

Fig. 3A zeigt nochmals die schematische Darstellung des von der Kamera am Aufstellungsort PI in Ausrichtung PI* aufgenommenen Bildes BO, auf welchem der im dreidimensionalen Raum liegende Referenzpunkt PII als PII' abgebildet ist. In der Bildmitte liegt die Abbildung des Punktes PZ, auf welchem die optische Achse senkrecht auf der Bilderfassungsebene BE steht. Der Punkt PII' ist vom Punkt PZ um den Wert d beabstandet. Die Lage des Punktes PII' gegenüber der Bildmitte PZ ist durch die horizontale und vertikale Abstandskomponente dx und dy gekennzeichnet.

Fig.3B zeigt eine schematische Darstellung eines von der Kamera am Aufstellungsort PI in Ausrichtung PI* aufgenommenen Bildes B1 auf dem Bildschirm, in welchem sogenannte Markierungspunkte z.B. als kleine Leuchtpunkte P1', P2', P3', P4', P5',..., kenntlich gemacht sind. Die Kennzeichnung der Markierungspunkte wird computerprogrammgesteuert vorgenommen. Das Programm wählt dabei in dem von der Kamera K aufgenommenen Bild jene Punkte als Markierungspunkte P1', P2', P3', P4', P5' aus, die durch starke Sprünge im Helligkeitsverlauf des Bildes gekennzeichnet sind. Derartige Programme mit einer solchen Funktion sind aus der computerprogrammgesteuerten Mustererkennung bekannt (Beispiel: "Canny-Algorithmus". Dieser Canny-Algorithmus - siehe auch unter Canny-Algorithmus im Internet unter "Wikipedia" / freie Enzyklopedie - ist ein in der digitalen Bildverarbeitung weit verbreiteter Algorithmus zur Kantendetektion. Er liefert ein Bild, welches idealerweise nur noch die Kanten des Ausgangsbildes enthält).

Üblicherweise wird je nach vorliegender Gegebenheit auf einem Bildschirmbild eine große Zahl (mitunter hunderte oder mehr) solcher Markierungspunkte erfasst. Aus Übersichtsgründen wurden in der Darstellung gemäß Fig. 3B nur die Abbildungen (P1', P2',...P5') von fünf solchen Markierungspunkten angegeben.

Für jeden Markierungspunkt P1', P2', P3', P4', P5' sind dessen auf PZ in Bildmitte der Darstellung B1 in Fig. 3A bezogene Bildschirmkoordinaten (für P1' mit dx1 und dy1 gekennzeichnet) computerprogrammgesteuert verfügbar.

Diese Markierungspunkte P1', P2', P3', P4', P5' können als Abbildungen imaginärer gedachter Raumpunkte P1, P2, P3, P4, P5 auf der Bilderfassungsebene bzw auf dem entsprechenden Bildschirmbild B1 interpretiert werden. Dabei sind die Raumkoordinaten dieser imaginären gedachten Raumpunkte P1, P2, P3, P4, P5 unbekannt.

Zunächst erfolgt computerprogrammgesteuert die Berechnung der Lage der optischen Achse A für folgende Kamera-Position PI/PI*:

Dabei bezeichnet PI den Aufstellungsort, d.h. der Referenzpunkt PI, dessen x,y,z- Koordinaten bekannt sind, stimmt mit dem Zentrum Z der Optik O der Kamera K überein. Für diesen Aufstellungsort PI nimmt die Kamera K die Ausrichturigs-Position PI* ein.

Für diese Positionierung PI/PI* der Kamera K wird der Verlauf ihrer optischen Achse A im dreidimensionalen Raum computerprogrammgesteuert berechnet Diese Berechnung erfolgt unter Vorgabe der x-y-z Koordinaten der Referenzpunkte PII und PI und aus den gemäß Fig. 3A vorliegenden Abstandskomponenten dx und dy zwischen PZ und PII'. Diese Angaben reichen für die Lageberechnung der optischen Achse der Kamera in der Position PI/PI* aus.

Fig. 3C zeigt eine schematische Darstellung eines von der Kamera am Aufstellungsort PI in Ausrichtung PI** aufgenommenen Bildes B2 auf dem Bildschirm. In diesem Bild B2 (Fig. 3C) erscheinen u.a. nur noch die Abbildungen P1", P2", P3" der gedachten Markierungspunkte P1, P2, P3. Diese Abbildungen P1", P2", P3" sind jedoch gegenüber den Abbildungen P1', P2', P3' in Bild 1 (Fig.3B) der gedachten Markierungspunkte P1, P2 und P3 auf der Bildschirmfläche verschoben.

Fig.3D zeigt eine schematische Darstellung der Überlagerung der Bildschirmdarstellung B1 gemäß Fig. 3B mit der Bildschirmdarstellung B2 gemäß Fig. 3C zur Erläuterung der FIX-Markierungspunkte. Aus dieser Darstellung ist zu ersehen, dass sich die Abbildungen P1', P2', P3' (gemäß Bild B1 für eine Ausrichtposition PI* der Kamera K) der Markierungspunkte P1, P2 und P3 gegenüber ihren Abbildungen P1", P2", P3" (gemäß Bild B2 für eine Ausrichtposition P** der Kamera K) in der Bildschirmebene verschoben haben.

Abbildungen der gedachten Markierungspunkte P4 und P5 (im Bild B1 gemäß Fig. 3B noch mit P4' und P5' bezeichnet) tauchen in Bild B2 - computerprogrammgesteuert bewirkt- nicht mehr auf, d. h. sie wurden unterdrückt, weil in Bild B2 gemäß Fig. 3C nur die Abbildungen (P1", P2", P3") bestimmter Markierungspunkte (P1, P2, P3) auftreten, die das Kriterium für sogenannte FIX- Markierungs-Punkte erfüllen. Die imaginären Markierungspunkte P1, P2 und P3 sind solche FIX-Markierungspunkte, weil ihre Abbildungen P1', P2', P3' im Bild B1 gemäß Fig. 3B im Vergleich zu ihren Abbildungen P1", P2", P3" im Bild B2 gemäß Fig. 3C die gleiche gegenseitige winkelbezogene Abweichung aufweisen (unabhängig von ihrer "Verschiebung" auf der Bildschirmfläche).

Unter dieser winkelbezogenen Abweichung ist folgendes zu verstehen:
Die in Bild B1 gemäß Fig.3B und in Bild B2 gemäß Fig. 3C schematisch angedeuteten durch die Eckpunkte P1', P2', P3' bzw. P1", P2", P3" gekennzeichneten Dreiecke werden bei einer Verschiebung auf der Bildschirmfläche je nach ihrer Entfernung zum Punkt PZ lagebezogene Verzerrungen aufweisen. FIX-Markierungspunkte können deshalb nicht durch eine solche Dreiecksfläche definiert werden (die Dreiecke dienen hier nur der Andeutung der Winkelverhältnisse). Das Kriterium für die FIX-Markierungspunkte P1, P2 und P3 bestimmt, dass ihre Abbildungen P1', P2' und P3' zueinander die gleichen Winkelabweichungen aufweisen wie ihre Abbildungen P1", P2" und P3".

Dem gedachten FIX-Markierungspunkt P1 ist seine Abbildung P1' in Bild B1 und seine Abbildung P1" in Bild B2 zugeordnet; dem FIX-Markierungspunkt P2 sind seine Abbildung P2' bzw. P2" zugeordnet usw. Die Abbildungen P1', P2', P3' (der gedachten FIX-Markierungspunkte P1, P2, P3) in Bild B1 und die Abbildungen P1", P2", P3" (der gedachten FIX-Markierungspunkte P1, P2, P3) in Bild B2 werden computerprogrammgesteuert einander zugeordnet, damit keine Verwechselungen auftreten können. Für eine solche Zuordnung stehen bekannte Computerprogramme zur Verfügung (z.B. solche, die nach der sogenannten Lucas-Kanade-Methode arbeiten. Diese Lucas-Kanade-Methode - siehe auch unter "Lucas-Kanade-Methode" im Internet unter "Wikipedia" / freie Enzyklopedie - beruht auf der Grundgleichung des optischen Flusses).

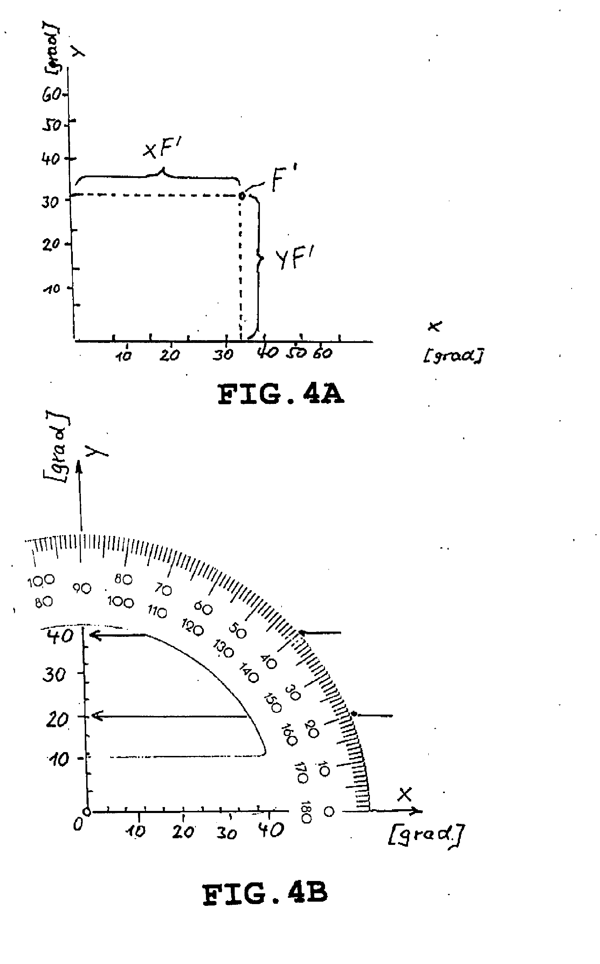

Die Bilderfassungsebene BE kann gemäß den Darstellungen in Fig.4A und Fig. 4B und den dazugehörigen Erläuterungen sowohl in kartesischen oder in Winkelkoordinaten geeicht sein. Den kartesischen Koordinaten liegen die auf einen Ursprung (hier PZ) bezogenen x bzw. y-Komponenten einer Punkt-Abbildung zugrunde.

Bei einer Winkeleichung der Bilderfassungsebene BE wird die Lage dieses Punktes auf den Winkel bezogen, der zwischen der optischen Achse (sie verläuft durch Z und PZ) und einem durch Z und diesem Punkt verlaufenden Strahl gebildet wird. Für diesen Winkel werden zwei Winkel-Komponentenwerte gebildet, die den kartesischen Komponenten x bzw. y entsprechen.

Mit anderen Worten: Für z.B. zwei voneinander entfernt in der Bilderfassungsebene BE bzw der Bildschirmebene liegende Punkte kann der Abstand dieser Punkte durch ihre Winkeldifferenzwerte (Winkelabweichungen) definiert werden. Das heißt zum Beispiel, dass für beide imaginären FIX-Markierungspunkte P1 und P2 die Winkelabweichung zwischen ihren Abbildungen und P2' (im Bild B1 gemäß Fig. 3B) die gleiche ist wie die Winkelabweichung zwischen ihren Abbildungen P1" und P2"(im Bild B2 gemäß Fig. 3C).

Für jeden dieser imaginären FIX-Markierungspunkte P1, P2 und P3 wird aus deren Abbildungen P1', P2', P3' in Bild B1 gemäß Fig. 3B aus dessen Bildschirmkomponenten (z.B. d1x, d1y für P1',...) bezogen auf den Punkt PZ und aus dem zuvor errechneten Verlauf der optischen Achse A für die Ausrichtposition PI* der Digital-Video-Kamera die Verlaufsrichtung eines gedachten im dreidimensionalen Raum verlaufenden Strahls als sogenannter Verlaufsanfangswert ermittelt, auf dem ein solcher FIX-Markierungspunkt und der Referenzpunkt PI liegen. Für das erfindungsgemäße Verfahren müssen mindestens zwei FIX-Markierungspunkte vorliegen.

Des Weiteren erfolgt die computerprogrammgesteuerte Errechnung des Verlaufs der optischen Achse im dreidimensionalen Raum für die Digital-Video-Kamera K in der Ausrichtposition PI** aus dem winkelbezogenen Verschiebungswert zwischen den Abbildungen P1' und P1" des FIX-Markierungspunktes P1 und dem Verlaufsanfangswert dieses Markierungspunktes P1.

Höhere Genauigkeiten können erreicht werden, wenn eine computerprogrammgesteuerte Berechnung eines Mittelwertes aus den winkelbezogenen Verschiebungswerten für mehrere FIX-Markierungspunkte erfolgt, wobei für jeden FIX-Markierungspunkt (P1, P2, P3) der Verschiebungswert als Verschiebung seines Abbildungspunktes P1', P2, P3 in Bildschirmdarstellung B1 zu seinem Abbildungspunkt P1",P2",P3" in Bildschirmdarstellung B2 definiert ist, und wobei der Errechnung des Verlaufs der optischen Achse im dreidimensionalen Raum für die Digital-Video-Kamera K in der Ausrichtposition PI** dieser Mittelwert zugrunde gelegt wird. Durch die Mittelwertbildung können Störeinflüsse (z.B. durch Rauschen bedingt) minimiert werden.

Des Weiteren ist in der Bildschirmdarstellung B2 ein im Raum liegender Messpunkt M als M' abgebildet, dessen Lage im Raum wie folgt ermittelt wird:
Computerprogrammgesteuerte Bestimmung der horizontalen mh und vertikalen mv Koordinatenabweichung von der Abbildung M' bezogen auf PZ, und Errechnung der Lage eines gedachten Strahles im dreidimensionalen Raum, auf dem der Messpunkt M und der Referenzpunkt PI liegen, aus der bereits errechneten Lage der optischen Achse für die Digital-Video-Kamera K in der Ausrichtposition PI** und aus den Koordinatenabweichungen mh und mv.

Mit dem erfindungsgemäßen Verfahren kann nicht nur die Lage eines gedachten Strahls im geometrischen Raum ermittelt werden, auf dem ein Messpunkt M und das Zentrum Z des Objektivs der Digital-Video-Kamera K liegen. Es ist auch möglich, die absoluten Raumkoordinaten dieses Messpunktes computerprogrammgesteuert zu bestimmen. Hierzu muss zusätzlich zu der Lage des gedachten Strahls auch die Entfernung vom Zentrum Z des Objektivs (bzw. von der Aufstellungsposition PI der Kamera K) zum Referenzpunkt PII bekannt sein. Diese Entfernung ist leicht durch einen Entfernungsmesser, z.B. einem Laser-Entfernungsmesser, erfassbar. Unter Vorgabe des Entfernungswertes werden dann computerprogrammgesteuert aus der bekannten Lage des gedachten Strahls und dem Entfernungswert die Raumkoordinaten des Messpunktes berechnet.

Der Entfernungsmesser ist vorzugsweise zusammen mit der Kamera schwenkbar angeordnet. Dabei korreliert seine Achse mit dem Verlauf der optischen Achse der Kamera K. Für Abweichungen im Verlauf beider Achsen erfolgt computerprogrammgesteuert ein Parallaxenausgleich.

Bei der Positionierung der Digital-Video-Kamera K auftretende Abweichungen des Referenzpunktes PI von dem Zentrum Z des Objektivs O werden durch an sich bekannte messtechnische Verfahren als Abweichungswerte erfasst. Mit diesen Abweichungswerten erfolgt eine computerprogrammgesteuerte Korrekturberechnung dahingehend, als wäre die Digital-Video-Kamera K richtig in Übereinstimmung des Referenzpunktes PI mit dem Zentrum Z des Objektivs O positioniert. Vergleichbare Korrekturberechnungen sind unter der Bezeichnung Parallaxenausgleich bekannt.

Die Digital-Video-Kamera K weist eine Digital-Zoom-Funktion auf. Bei der computerprogrammgesteuerten Erfassung von Abbildungspunkten auf dem Bildschirm B werden ausgewählte Bildbereiche gezoomt vergrößert dargestellt. In der vergrößert dargestellten Abbildung eines Raum-Punktes ist erfindungsgemäß eine auswählbare Zielstelle innerhalb dieser Abbildung entsprechend dem Bildschirmrasters markierbar. Hierdurch ist eine genauere Ziel-Markierung möglich.

Die Einstellung der Digital-Video-Kamera K in eine Ausrichtposition (PI*, PI**) erfolgt über eine Bildschirmsteuerung. Dabei wird die aktuelle Ausrichtung der Digital-Video-Kamera K auf einem Bildschirm dargestellt und durch vorgebbare Steuerdaten zur Erreichung der Ziel-Ausrichtposition (PI*, PI**) beeinflusst.

Es wurde bereits erwähnt, dass die x-y-z-Koordinaten des Referenzpunktes PI vorgebbar sind. Diese Vorgabe kann auf die unterschiedlichste Art erfolgen:
Beispielsweise können die x-y-z-Koordinaten für einen vorbekannten Referenzpunkt bereits bekannt sein; sie können durch bekannte "klassische" Methoden der Vermessungstechnik ermittelt werden. Vorzugsweise wird erfindungsgemäß für die Vorgabe der xyz Koordinaten des Referenzpunktes PI ein Empfänger für ein Navigations-Satelliten-System benutzt. Bei Abweichungen eines nicht auf den Schwenkpunkt PI der Kamera ausgerichteten Empfängers erfolgt eine computerprogrammgesteuerte Korrekturberechnung dahingehend, als wäre der Empfänger auf den Schwenkpunkt PI der Kamera ausgerichtet.

Erfindungsgemäß kann die Anordnung, welche die Kamera K, den Computer C und den Bildschirm B umfasst, mit einer Bildkamera mit dreidimensionalem Bilderfassungssensor gekoppelt werden.

Diese Kopplung bezweckt, dass computerprogrammgesteuert
a) dass von der 3 D Kamera aufgenommene Bild für eine "ungenau" gemessene Entfernung (gemessen durch einen "ungenauen" Entfernungsmesser der 3 D Kamera) auf eine "genauer" gemessene Entfernung (gemessen durch den "genaueren" Entfernungsmesser der erfindungsgemäßen Anordnung) bezogen wird und / oder
b) dass die relativen Bilddaten für das durch die 3 D Kamera mit dem dreidimensionalen Bilderfassungssensor erfasste Bild, auf die absoluten für einen Messpunkt M des Objektes ermittelten Raumkoordinaten bezogen werden.

Fig. 4A zeigt eine schematische Darstellung der Bildschirmfläche für Positionsangaben in kartesischen x-y Koordinaten und in Winkelkoordinaten.

Fig.4B zeigt eine schematische Hilfsdarstellung zur Eichung der Bildschirmdarstellung gemäß Fig. 4A in Winkelkoordinaten.

Die Bildschirmebene (Fig. 4A) ist in kartesischen und in Winkelkoordinaten geeicht. Den kartesischen Koordinaten liegen die auf einen Ursprung (hier PZ) bezogenen x bzw. y-Komponenten xF' bzw.yF' einer Punkt-Abbildung (z.B. F') zugrunde.

Bei einer Winkeleichung (in Grad) wird die Lage dieses Punktes F' auf den Winkel bezogen, der zwischen der optischen Achse (sie verläuft in Fig. 2 durch Z und PZ) und einem durch Z und F' verlaufenden Strahl liegt. Für diesen Winkel werden zwei Winkel-Komponentenwerte gebildet, die den kartesischen Komponenten xF' bzw. yF' entsprechen.

Für z.B. zwei voneinander entfernt in der Bildschirmebene liegende Punkte kann der Abstand dieser Punkte durch ihre Winkeldifferenzwerte (Winkelabweichungen) definiert werden.

Fig.4B zeigt eine schematische Hilfsdarstellung zur Eichung der Bildschirmdarstellung gemäß Fig. 4A in Winkelkoordinaten. Eine zunächst nur in kartesischen Koordinaten x, y geeichte Bildschirmfläche kann bildlich gesehen durch Anlegen eines Winkelmessers für Winkelkoordinaten wie folgt geeicht werden:
Die Winkelpositionen werden am äußeren Rand des Winkelmessers markiert (z.B. für die 20 bzw 40 Grad Position) und die markierten Punkte (hier) auf die Ordinate projeziert. Analoges gilt für die Eichung der Abzisse in Winkelgraden. Eine solche Transformation kartesischer in Winkel-Koordinaten kann computerprogrammgesteuert vollzogen werden.

Die Anordnung zur Durchführung des erfindungsgemäßen Verfahrens zur Bestimmung der Lage eines Messpunktes M im geometrischen Raum umfasst gemäß der Darstellung in Fig. 2 eine Digital-Video-Kamera K und einen mit der Kamera K verbundenen Computer C mit einem Bildschirm B zur Darstellung des von der Kamera K erfassten Bildes und zur Markierung von Bildpunkten.

Die Digital-Video-Kamera K ist durch eine gedachte optische Achse A, ein Objektiv O und eine Bilderfassungsebene BE gekennzeichnet. Die optische Achse A verläuft durch das Zentrum Z des Objektivs O und steht im Punkt PZ senkrecht auf der Bilderfassungsebene BE. Die Digital-Video-Kamera K ist um den gedachten Zentrumspunkt Z des Objektivs O in wählbare Ausrichtungspositionen PI*, PI** schwenkbar. Die Digital-Video-Kamera K ist an einem gedachten Referenzpunkt PI mit vorgebbaren Raumkoordinaten derart aufstellbar, dass dieser Referenzpunkt PI mit dem Zentrum Z des Objektivs O übereinstimmt (bzw. bei Abweichungen auf ihn abgestimmt ist). In einer ersten Ausrichtposition PI* der Digital-Video-Kamera K umfasst das von dieser erfasste Bild BO (Fig. 3A) die Abbildung PII' eines im geometrischen Raum liegenden Referenzpunktes PII mit vorgebbaren Raum Koordinaten. In derselben Ausrichtposition PI* der Digital-Video-Kamera K sind gemäß Bild B1 (Fig. 3B) Abbildungen P1', P2', P3', P4', P5',...Pn'gedachter Markierungspunkte P1, P2, P3, P4, P5, ..Pn (mit unbekannten Raumkoordinaten) erfassbar.

Die Anzahl der Markierungspunkte bzw. ihrer Abbildungen ist nicht begrenzt. Je nach Gegebenheit kann diese Anzahl z.B. 100 oder 1000 betragen. Die Markierungspunkte werden automatisch computerprogrammgesteuert erzeugt; ihre Anzahl richtet sich nach den Gegebenheiten des erfassten Bildes.

In der Ausrichtposition P** der Digital-Video-Kamera K sind in dem von dieser erfassten Bild B2 (Fig.3C) nur die Abbildungen P1", P2", P3", .... der gedachten Raumpunkte P1, P2, P3,.. in einer verschobenen Position auf dem Bildschirm wiedergegeben, deren gegenseitige raumwinkelbezogene auf den Punkt Z bezogene Anordnung die gleiche ist, wie für die Punkte P1', P2', P3',... im Bild B1 für die Ausrichtposition PI*.

Des Weiteren ist in der Ausrichtposition PI** gemäß Bild B2 (Fig. 3C) die Abbildung M' eines Messpunktes M im geometrischen Raum erfassbar, dessen räumliche Lage auf einem gedachten, durch ihn, M und PI verlaufenden Strahl durch die Bildschirmkoordinaten der Abbildungen P1', P2', P3' und P1", P2", P3" der Markierungspunkte P1, P2 und P3 und die Raumkoordinaten der Referenz-Punkte PI und PII definiert ist.

Zur Einstellung der Digital-Video-Kamera K in eine ihrer Ausrichtposition (PI*, PI**) ist eine Schwenkanordnung vorgesehen. Die Einstellung der Digital-Video-Kamera K in eine Ausrichtposition (PI*, PI**) ist über eine Bildschirmdarstellung steuerbar.

Die erfindungsgemäße Vermessungsanordnung ist um einen mit dem Computer C verbindbaren Empfänger zur Positionsbestimmung erweiterbar, welcher auf einem Navigations-Satelliten-System zur Positionsbestimmung wie dem Global Positioning System (GPS) basiert. Dieser Empfänger ist auf den Schwenkpunkt PI der Kamera ausrichtbar.

Die Vermessungsanordnung ist mit einem mit dem Computer C verbundenen Entfernungsmesser verbindbar. Zweckmäßigerweise ist er so montiert, dass er zusammen mit der Digital-Video-Kamera geschwenkt werden kann.

Abweichungen des Zentrums Z des Objektivs vom Referenzpunkt PI bei der Positionierung der Kamera, Abweichungen im Verlauf der optischen Achse A von der Zielrichtung des Entfernungsmessers, Abweichungen der Empfänger-Achse vom Schwenkpunkt Z der Kamera sind durch an sich bekannte Maßnahmen (z.B. Parallaxenausgleich) kompensierbar.

Die Vermessungsanordnung ist mit einer Digital Video Kamera, welche einen dreidimensionalen Bilderfassungssensor umfasst, koppelbar. Die Digital Video Kamera mit dem dreidimensionalen Bilderfassungssensor ist auf ein Messobjekt ausrichtbar. Die Anordnung zur Bestimmung der Lage eines Messpunktes M im geometrischen Raum ist auf einen Punkt dieses Messobjektes ausrichtbar. Durch die Kopplung können die relativen Koordinaten eines durch den dreidimensionalen Bilderfassungssensor erfassten Bildes auf die erfindungsgemäß erfassbare Lage des Messpunktes bezogen werden.

Derartige Digital-Video-Kameras mit einem dreidimensionalen Bilderfassungssensor sind im Handel verfügbar, z.B. als "Swiss Ranger SR 4000" der Firma MESA Imaging AG, Zürich / Schweiz.

### Bezugszeichenliste

- A: Achse
- B: Bildschirm
- BE: Bilderfassungsebene
- C: Computer
- K: Kamera
- O: Objektiv
- Z: Zentrum

## Patentansprüche

1. Computerprogrammgesteuertes Verfahren zur Bestimmung der Lage eines Mess-Punktes M in einem dreidimensionalen Raum D mit einem kartesischen x-y-z Koordinaten-System, unter Verwendung einer Anordnung, welche einen Computer (C) mit Bildschirm (B) und eine damit verbundene Digital -Video-Kamera (K) umfasst,
wobei die Digital-Video-Kamera (K) ein Objektiv (O), einen Bildsensor-Chip mit einer Bilderfassungsebene (BE) aus adressierbaren rasterartig angeordneten Pixel (Bildpunktpositionen) und eine optische Achse (A) aufweist, die durch das Zentrum (Z) des Objektivs (O) verläuft und im Punkt PZ senkrecht auf der Bilderfassungsebene (BE) steht,
wobei der Bildschirm (B) des Computers (C) der Darstellung des Digital-Video-Kamera-Bildes und zur Markierung von Punkten des dargestellten Bildes dient, und
wobei die Digital-Video-Kamera (K) eine Aufstellungsposition einnimmt, in welcher ihr optisches Zentrum (Z) mit einem Referenzpunkt PI vorgebbarer x-y-z Koordinaten übereinstimmt und wobei die Digital-Video-Kamera (K) um diesen Referenzpunkt PI in unterschiedliche Ausrichtpositionen PI*, PI** schwenkbar ist, in denen ihre optische Achse jeweils eine andere Lage im dreidimensionalen Raum einnimmt, **gekennzeichnet durch** folgende Verfahrensschritte:
Die Digital-Video-Kamera (K) wird in einer Ausrichtungsposition PI* derart auf einen im dreidimensionalen Raum liegenden Referenzpunkt PII mit vorgebbaren x-y-z -Koordinaten ausgerichtet, dass die Abbildung PII' von PII in der Bildschirmdarstellung BO von dem Punkt PZ um den Wert d beabstandet ist, wobei die Lage von PII' bezüglich PZ in der xy Bildschirmebene **durch** die horizontale und vertikale Abstandskomponente dx und dy zwischen PZ und PII' bestimmt ist,
computerprogrammgesteuerte Errechnung der Lage der optischen Achse (A) im dreidimensionalen Raum für die Ausrichtposition PI* der Digital-Video-Kamera (K) aus den x-y-z Koordinaten der Referenzpunkte PII und PI und den Abstandskomponenten dx und dy zwischen PZ und PII';
computerprogrammgesteuerte Markierung und Erfassung von sogenannten im dreidimensionalen Raum liegenden imaginären Markierungspunkten (P1, P2, P3, P4, P5,..., Pn), wobei deren Abbildungen (P1', P2', P3', P4', P5', ...,Pn') auf dem **durch** die Digital-Video-Kamera in Ausrichtungsposition PI* aufgenommenen Bild B1 **durch** starke Sprünge im Helligkeitsverlauf des Bildes gekennzeichnet sind und markiert werden,
computerprogrammgesteuerte Markierung und Erfassung von mindestens zwei der im dreidimensionalen Raum liegenden imaginären Markierungspunkten (P1, P2, P3, ...), deren Abbildungen (P1", P2", P3", ...) auf einem **durch** die Digital-Video-Kamera (K) in einer Ausrichtungsposition PI** aufgenommenen Bild B2 die gleiche gegenseitige winkelbezogene Abweichung aufweisen wie die Abbildungen P1', P2', P3', .... dieser Punkte P1, P2, P3, in dem **durch** die Digital-Video-Kamera (K) in der Ausrichtungsposition PI* aufgenommenen Bild B1, wobei die winkelbezogene Lage eines Punktes auf dem Bildschirm auf den Winkel bezogen wird, der zwischen der optischen Achse A der Kamera und einem gedachten **durch** das Zentrum (Z) der Optik (O) und diesem Punkt verlaufenden Strahl liegt und wobei dieser Winkel **durch** die den kartesischen Koordinatenwerten dieses Punktes entsprechenden Winkelkomponentenwerte definiert ist,
für jeden Markierungspunkt (P1,P2, P3), dessen Abbildung (P1',P2', P3') sowohl im Bildschirmbild B1 für die Ausrichtung der Kamera in PI*-Position und dessen Abbildung (P1", P2",P3") im Bildschirmbild B2 für die Ausrichtung der Kamera in PI**- Position erscheint, wird aus dessen Bildschirmkomponenten (d1x, d1y für P1', etc.) im Bildschirmbild B1, bezogen auf den Punkt PZ, und aus dem zuvor errechneten Verlauf der optischen Achse (A) für die Ausrichtposition PI* der Digital-Video-Kamera die Verlaufsrichtung eines gedachten im dreidimensionalen Raum verlaufenden Strahls als sogenannter Verlaufsanfangswert ermittelt, auf dem ein solcher Markierungspunkt und der Referenzpunkt PI liegen;
computerprogrammgesteuerte Errechnung des Verlaufs der optischen Achse (A) im dreidimensionalen Raum für die Digital-Video-Kamera (K) in der Ausrichtposition PI** aus der winkelbezogenen Verschiebungswert zwischen den Abbildungen P1' und P1" des Markierungspunktes P1 und dem Verlaufsanfangswert dieses Markierungspunktes P1,
computerprogrammgesteuerte Bestimmung der horizontalen (mh) und vertikalen (mv) Koordinatenabweichung von der Abbildung M' im Bild 2 des im dreidimensionalen Raum liegenden Messpunktes M bezogen auf PZ, und Errechnung der Lage eines gedachten Strahles im dreidimensionalen Raum auf dem der Messpunkt M und der Referenzpunkt PI liegen aus der bereits errechneten Lage der optischen Achse (A) für die Digital-Video-Kamera K in der Ausrichtposition PI** und den Koordinatenabweichungen (mh und mv).

2. Verfahren nach Anspruch 1, **dadurch gekennzeichnet, dass** eine computerprogrammgesteuerte Berechnung eines Mittelwertes für die winkelbezogenen Verschiebungswerte mehrerer Markierungspunkte erfolgt,
wobei für jeden Markierungspunkt (P1, P2, P3) der Verschiebungswert als Verschiebung seines Abbildungspunktes (P1', P2', P3') in Bildschirmdarstellung B1 zu seinem Abbildungspunkt (P1",P2",P3") in Bildschirmdarstellung B2 definiert ist, und
wobei der Errechnung des Verlaufs der optischen Achse im dreidimensionalen Raum für die Digital-Video-Kamera K in der Ausrichtposition PI** dieser Mittelwert zugrunde gelegt wird.

3. Verfahren nach Anspruch 1 oder 2, **dadurch gekennzeichnet, dass** für einen vorgebbaren Entfemungswert von der Aufstellungsposition PI der Digital-Video-Kamera (K) zum Messpunkt M im dreidimensionalen Raum computerprogrammgesteuert aus dem Verlauf eines gedachten den Messpunkt M und den Referenzpunkt PI passierenden Strahles und aus dem Entfernungswert die Raumkoordinaten des Messpunktes M computerprogrammgesteuert bestimmt werden.

4. Verfahren nach einem der vorangehenden Ansprüche, **dadurch gekennzeichnet, dass** bei der Positionierung der Digital-Video-Kamera (K) auftretende Abweichungen des Referenzpunktes PI von dem Zentrum (Z) des Objektivs (O) durch an sich bekannte messtechnische Verfahren als Abweichungswerte erfasst und für eine Korrekturberechnung dahingehend verwendet werden, als wäre die Digital-Video-Kamera (K) richtig in Übereinstimmung des Referenzpunktes PI mit dem Zentrum (Z) des Objektivs (O) positioniert.

5. Verfahren nach Anspruch 4, **dadurch gekennzeichnet, dass** die Korrekturberechnung computerprogrammgesteuert durch einen Parallaxenausgleich erfolgt.

6. Verfahren nach einem der vorangehenden Ansprüche, **dadurch gekennzeichnet, dass** die Digital-Video-Kamera (K) eine Digital-Zoom-Funktion aufweist und dass bei der computerprogrammgesteuerten Erfassung von Abbildungspunkten auf dem Bildschirm (B) ausgewählte Bildbereiche gezoomt vergrößert dargestellt werden,
wobei in der vergrößert dargestellten Abbildung eines Raum-Punktes eine auswählbare Zielstelle innerhalb dieser Abbildung entsprechend dem Bildschirmrasters markierbar ist.

7. Verfahren nach Anspruch 1, **dadurch gekennzeichnet, dass** die Einstellung der Digital-Video-Kamera (K) in eine Ausrichtposition (PI*, PI**) über eine Bildschirmdarstellung gesteuert wird.

8. Verfahren nach Anspruch 1, **dadurch gekennzeichnet, dass** für die Vorgabe der xyz Koordinaten des Referenzpunktes PI ein Empfänger für ein Navigations-Satelliten-System benutzt wird.

9. Verfahren nach Anspruch 8, **dadurch gekennzeichnet, dass** bei Abweichungen eines nicht auf den Schwenkpunkt PI der Kamera ausgerichteten Empfängers eine computerprogrammgesteuerte Korrekturberechnung dahingehend erfolgt, als wäre der Empfänger auf den Schwenkpunkt PI der Kamera ausgerichtet.

10. Verfahren nach Anspruch 3, **dadurch gekennzeichnet, dass** für die Ermittlung des Entfernungswertes ein Laser-Entfernungsmesser benutzt wird.

11. Verfahren nach Anspruch 10, **dadurch gekennzeichnet, dass** für einen zusammen mit der Kamera schwenkbaren Entfernungsmesser computerprogrammgesteuert ein Parallaxenausgleich bezüglich der optischen Achse und dem Zielstrahl des Entfernungsmessers erfolgt.

12. Verfahren nach einem der Ansprüche 3 bis 11, **dadurch gekennzeichnet, dass** mit der die Kamera (K), den Computer (C) und dem Bildschirm (B) umfassenden Anordnung eine Bildkamera mit dreidimensionaler Bilderfassungssensor gekoppelt wird,
wobei die relativen Koordinaten eines durch den dreidimensionalem Bilderfassungssensor erfassten Bildes auf die Raumkoordinaten des Messpunktes M im dreidimensionalen Raum bezogen werden.

13. Anordnung zur Durchführung des Verfahrens nach einem der Ansprüche 1 bis 12 zur Bestimmung der Lage eines Messpunktes M im geometrischen Raum,
**dadurch gekennzeichnet, dass** eine Digital-Video-Kamera (K) und ein mit der Kamera (K) verbundener Computer (C) mit einem Bildschirm (B) vorgesehen ist zur Darstellung des von der Kamera (K) erfassten Bildes und zur Markierung von Bildpunkten,
dass die Digital-Video-Kamera (K) eine gedachte optische Achse (A), ein Objektiv (O) und eine Bilderfassungsebene (BE) aufweist,
wobei die durch das Zentrum (Z) des Objektivs (O) verlaufende optische Achse (A) senkrecht auf der Bilderfassungsebene (BE) steht,
dass die Digital-Video-Kamera (K) an einem Referenzpunkt PI mit vorgebbaren Raumkoordinaten derart aufstellbar ist, dass dieser Referenzpunkt PI mit dem Zentrum (Z) des Objektivs (O) übereinstimmt,
dass die Digital-Video-Kamera (K) um den gedachten Zentrumspunkt (Z) des Objektivs (O) in wählbare Ausrichtpositionen PI*, PI** schwenkbar ist,
dass in der ersten Ausrichtposition PI* der Digital-Video-Kamera K das von dieser erfasste Bild BO einen im geometrischen Raum liegenden Referenzpunkt PII mit bekannten vorgebbaren Raum- Koordinaten umfasst, und
dass in derselben Ausrichtposition PI* der Digital-Video-Kamera (K) das von dieser erfasste Bild B1 Abbildungen (P1', P2', P3', P4', P5', ....,Pn') gedachter Raum-Punkte (P1, P2,P3, P4, P5, ..., Pn) mit unbekannten Raumkoordinaten umfasst,
dass in der zweiten Ausrichtposition P** der Digital-Video-Kamera K in dem von dieser erfassten Bild B2 nur die Abbildungen (P1", P2", P3", ....) der gedachten Raumpunkte (P1, P2, P3, ...) auf der Bildfläche verschobenen darstellbar sind, deren gegenseitige raumwinkelbezogene Anordnung die gleiche ist, wie für die ihnen entsprechenden Abbildungen (P1', P2', P3',...) im Bild 1 für die Ausrichtposition PI*,
dass das Bild B2 die Abbildung M' eines Messpunktes M im Raum umfasst,
und dass die räumliche Lage eines gedachten durch diesen Messpunkt M und den Referenzpunkt PI verlaufenden Strahles durch die Bildschirmdaten für die Ausrichtpositionen PI*, PI** der Kamera (K) und die Raumkoordinaten der Referenz-Punkte PI und PII definiert ist.

14. Anordnung nach Anspruch 13, **dadurch gekennzeichnet, dass** zur Einstellung der Digital-Video-Kamera K in eine Ausrichtposition (PI*, PI**) eine Schwenkanordnung vorgesehen ist.

15. Anordnung nach Anspruch 13 oder 14, **dadurch gekennzeichnet, dass** die Schwenkanordnung zur Einstellung der Digital-Video-Kamera K in eine Ausrichtposition (PI*, PI**) über eine Bildschirmdarstellung steuerbar ist.

16. Anordnung nach Anspruch 13, **dadurch gekennzeichnet, dass** die Anordnung zur Bestimmung der Lage eines Messpunktes M im geometrischen Raum einen mit dem Computer C verbundenen Empfänger zur Positionsbestimmung umfasst, welcher auf einem Navigations-Satelliten-System zur Positionsbestimmung wie dem Global Positioning System (GPS) basiert.

17. Anordnung nach Anspruch 16, **dadurch gekennzeichnet, dass** der Empfänger zur Positionsbestimmung auf den Schwenkpunkt PI der Kamera ausrichtbar ist.

18. Anordnung nach einem der Ansprüche 13 bis 17, **dadurch gekennzeichnet, dass** ein mit dem Computer C verbundener Entfernungsmesser zur Erfassung der Entfernung vom Messpunkt M zur Digital-Video-Kamera vorgesehen ist.

19. Anordnung nach einem der Ansprüche 13 bis 18, **dadurch gekennzeichnet, dass** eine mit dem Computer koppelbare Digital-Video-Kamera mit einem dreidimensionalen Bilderfassungssensor vorgesehen ist, die auf ein Messobjekt ausrichtbar ist,
und dass die Anordnung zur Bestimmung der Lage eines Messpunktes M im geometrischen Raum auf einen Punkt dieses Messobjektes ausrichtbar ist,
und dass die relativen Koordinaten des vom dreidimensionalen Bilderfassungssensor erfassten Bildes mit den absoluten Raumkoordinaten des Messpunktes M verknüpfbar sind.

20. Anordnung nach Anspruch 13, **dadurch gekennzeichnet, dass** bei der Positionierung der Digital-Video-Kamera K auftretende Abweichungen des Referenzpunktes PI von dem Zentrum Z des Objektivs O in an sich bekannterweise ausgleichbar sind, als wäre die Digital-Video-Kamera (K) richtig in Übereinstimmung des Referenzpunktes PI mit dem Zentrum (Z) des Objektivs (O) positioniert.
